# EUROPEAN PATENT APPLICATION

(11) **EP 1 086 971 A1**
(43) Date of publication of application: **28.03.2001**
(21) Application number: 99910692.5
(22) Date of filing: 25.03.1999
(51) Int. Cl.: C08G 59/20, C09D 163/00, C08F 214/18, C08F 8/08, G02B 1/11

(54) **ANTIREFLECTION FILM AND NONGLARE ARTICLE**

(30) Priority: 25.03.1998 JP 7754698; 03.07.1998 JP 18877098
(71) Applicant: Daikin Industries, Ltd., Osaka-shi Osaka 530-8323 (JP)
(72) Inventor: AOYAMA, Takahisa, Settsu-shi, Osaka 566-8585 (JP); HACHISUKA, Hitoharu, Settsu-shi, Osaka 566-8585 (JP); MORITA, Shigeru, Settsu-shi, Osaka 566-8585 (JP); ARASE, Takuya, Settsu-shi, Osaka 566-8585 (JP); SHIMIZU, Tetsuo, Settsu-shi, Osaka 566-8585 (JP)
(74) Representative: HOFFMANN - EITLE
(86) International application number: JP9901503
(87) International publication number: WO9948944

(57) **Abstract**

An antireflection film comprising a cured film of a fluorine-containing prepolymer, which has a fluorine content of at least 50 wt. % and at least two epoxy groups bonded to one molecule, and a thickness of from 0.03 to 0.5 µm.

This antireflection film has improved scratch resistance and abrasion resistance with maintaining antireflection effects, since it can increase the film strength while keeping a low refractive index.

## Description

### FIELD OF THE INVENTION

The present invention relates to an antireflection film and an antireflection-treated article which is covered with an antireflection film.

### PRIOR ART

In general, a material having a low refractive index is preferable as a material of an antireflection film (AR film) which utilizes interference from the viewpoint of antireflection effects (see JP-A-2-19801, JP-A-3-6265, JP-A-4-74568, etc.). This tendency is remarkable in single-ply or two-ply antireflection films which are advantageous in view of the productivity. In the case of the antireflection films which utilize the interference, transparent materials are preferable since the use of materials which scatter light will inhibit the interference.

The application of a compound having an epoxy group in the antireflection technique is disclosed in, for example, JP-A-6-118656, JP-A-5-104673, JP-A-6-155652, JP-A-6-226928, JP-A-8-313704, etc. However, the epoxy compounds described in all of these patent applications except JP-A-8-313704 are hydrocarbon compounds. Such hydrocarbon epoxy compounds function only to improve the adhesion of the films or as resinous matrixes, but do not contribute to the decrease of a reflectance.

Since the epoxy compound disclosed in JP-A-8-313704 has the epoxy group at only one end of the molecule, the compound itself cannot be three dimensionally crosslinked, and thus the cured film does not have sufficient strength. Thus, it is necessary to add a large amount (at least 10 wt. %) of a silane compound to the epoxy compound, and the film strength and hardness are derived from the curing of the silane compound. Accordingly, the refractive index of the cured product is decreased only to about 1.37. Therefore, the use of such an epoxy compound is not advantageous from the viewpoint of the antireflection effects.

According to the invention disclosed in JP-A-8-313704, the epoxy compound is polymerized prior to coating. Thus, the disclosed invention is essentially in the same category as the prior arts which coat the polymer.

JP-A-9-222502 and JP-A-9-288210 disclose an antireflection film having microvoids the size of which is smaller than the wavelength of light. The disclosed antireflection film has no problems in the antireflection effects and scratch resistance. However, this antireflection film seems to have low abrasion resistance which is practically more important than the scratch resistance, since it has the microvoids. Furthermore, emulsified particles having a particle size of about 30 to 50 nm should be uniformly spread over the whole surface of a substrate with piling up two or three particles in the thickness direction. Therefore, a coating method is limited to spin coating as described in these patent applications, and mild drying at room temperature is required. Thus, the productivity seems to be low.

In addition, JP-A-9-288202 discloses an attempt to achieve the scratch resistance and the antireflection properties at the same time by the formation of a very thin film which has substantially no influence on the antireflection effects on a layer having a low refractive index. However, this attempt is not advantageous from the viewpoint of the production cost, since the step to form the thin film is added to the process.

### SUMMARY OF THE INVENTION

One object of the present invention is to provide an antireflection film which has the improved scratch resistance and abrasion resistance with maintaining the antireflection effects by the increase of the film strength while keeping a low refractive index.

Another object of the present invention is to provide an antireflection-treated article which is covered with such an antireflection film.

According to the present invention, the above objects are achieved by an antireflection film comprising a cured film of a fluorine-containing prepolymer, wherein the prepolymer is a compound having a fluorine content of at least 50 wt. % and at least two epoxy groups bonded to one molecule, and the thickness of the cured film is from 0.03 to 0.5 µm, and an antireflection-treated article covered with the above antireflection film.

### DETAILED DESCRIPTION OF THE INVENTION

There are two methods for synthesizing the fluorine-containing prepolymer having at least two epoxy groups bonded to one molecule.

One method comprises copolymerizing a monomer having an epoxy group such as an acrylate or methacrylate having a glycidyl group on a side chain, and a fluorine-containing monomer. This method can introduce the epoxy groups basically in the intermediate part of the molecular chain. When the epoxy groups are bonded to the intermediate part of the molecular chain, the motion of the epoxy groups is restricted so that it maybe difficult to induce a crosslinking reaction. When the crosslinking is effected, large side chains extend from the crosslinking sites, and thus the hardness of the film may not be increased. Furthermore, since the number of the epoxy groups to be introduced is stochastically determined, some molecules have a few epoxy groups (in an extreme case, no epoxy group), while some have a number of the epoxy groups. Therefore, the prepolymer may not be uniformly crosslinked as a whole, so that the film strength may not be increased.

The other method for the introduction of the epoxy groups in the prepolymer comprises introducing the epoxy groups near the both ends of the molecular chain. This method does not suffer from the above-described drawbacks, but the synthesis of the prepolymer is rather difficult.

As a method for introducing epoxy groups at the both ends of a fluorine-containing compound, a method using a fluorine-containing compound having iodine atoms at the both ends of the molecule is disclosed (for example, KOBUNSHI RONBUNSHU (COLLECTED POLYMER PAPERS), Vol. 49, No. 10 (1992) 765-783). While the compound having the iodine atoms at the both ends may be a low molecular weight compound, it is known that such a compound can be synthesized by polymerizing a fluorine-containing olefin or an α-fluoroacrylate according to an iodine-transfer polymerization method (see, for example, JP-B-58-4728, JP-A-6-228231, etc.)

It is possible to synthesize a compound having a very low refractive index and the epoxy groups at the both ends of the molecule through the selection of a fluorine-containing olefin with a high fluorine content, for example, tetrafluoroethylene (TFE), a perfluorovinyl ether (PFVE), hexafluoropropylene (HFP), etc. Hereinafter, the (co)polymerized part of the fluorine-containing olefin will be referred to as the backbone of the fluorine-containing prepolymer having the epoxy groups (epoxy group-containing compound) to be used according to the present invention. Polymers having functional groups at the both ends of the molecule including the above epoxy compounds are named telecheric polymers.

Examples of a method for introducing epoxy groups at the molecular ends include a method comprising adding glycidyl allyl ether to the terminal iodine atoms of the above fluorine-containing compound having iodine atoms at the both molecular ends, a method comprising adding allyl alcohol to the above fluorine-containing compound having iodine atoms at the both molecular ends and then deleting HI, and the like. In the method comprising the addition of glycidyl allyl ether, the fluorine-containing prepolymer has C-I bonds. The C-I bonds are preferably removed by a certain method, since they often have the large light absorption in the UV range of 300 nm or less.

For example, the C-I bonds may be eliminated by removing them in the form of HI using an alkali (e.g. KOH, NaOH, etc), by converting the C-I bonds to C-H bonds through a reducing reaction with zinc powder, etc., or replacing the iodine atoms with other halogen atoms using F₂, Br₂ or Cl₂.

As a monomer constituting the backbone, any fluorine-containing monomer which can be polymerized by the iodine-transfer polymerization method may be used. Examples of such a monomer include vinylidene fluoride, TFE, HFP, PFVE, perfluorodialkyldioxol and perfluoromonoalkyldioxol which are disclosed in JP-A-7-138252. To improve the adhesion, known monomers having a functional group such as -OH, -NH₃, -COOH, -COOR, -O-CO-R in which R is CH₃, CH₃CH₂- etc. may be used. Among them, TFE, HFP and PFVE are preferable from the viewpoint of the refractive indexes, easy availability, prices, copolymerizability and the easiness of the iodine-transfer polymerization.

Specific examples of the perfluorovinyl ether (PFVE) include perfluoromethyl vinyl ether (PMVE), perfluoroethyl vinyl ether (PEVE), perfluoropropyl vinyl ether (PPVE), CF₂=CF-O-[CF₂-CF(CF₃)-O-]ₙ-C₃F₇ in which n is an integer of 1 to 4, and so on.

The above monomers are polymerized to form the backbone. The monomer composition of the backbone is determined by taking into consideration the copolymerizabilities, the easiness of the iodine-transfer polymerization, costs, the reactivity of the epoxy group, transparency, hardness after curing, antireflection effects, abrasion resistance, etc. The backbone consisting of the TFE repeating units has the crystallinity, and thus it has the following drawbacks:
1. The refractive index increases.
2. The formation of a uniform film is difficult because of the deterioration of the film-forming properties (whitening).
3. The movement of the molecules is restricted by the crystallization, so that the curing reaction of the epoxy compound is prevented.

The increase of the refractive index leads to the decrease of the antireflection effects. Non-formation of the uniform film leads to the deterioration of the scratch resistance and abrasion resistance of the film.

To remove the above drawbacks, the backbone of the epoxy group-containing prepolymer is preferably a copolymer comprising a comonomer which disturbs the crystallinity, rather than the TFE repeating units only. An amorphous copolymer is more preferable. As a comonomer, the above exemplified one may be used.

In view of the costs, the backbone consisting of the TFE repeating units is preferable. Thus, the monomer composition is desirably determined by taking into consideration the balance between the above drawbacks and the costs.

Besides the homopolymers of the above monomers, preferable examples of the monomer composition are as follows:
50-99 mole % of TFE/1-50 mole % of PMVE
60-99 mole % of TFE/1-40 mole % of PPVE
70-99 mole % of TFE/1-30 mole % of HFP.

From the viewpoint of the transparency and the refractive index, the following monomer compositions are preferable:
50-70 mole % of TFE/30-50 mole % of PMVE
60-80 mole % of TFE/20-40 mole % of PPVE.

Of course, it is possible to use 30 mole % or less of other known copolymerizable monomer (e.g. CF₂=CFCl, CH₂=CFH, CH₂=CF₂, CH₂=CH₂, etc.) to change the physical properties of the film as intended.

To impart additional functions to the polymer, monomers having various side chains may be used. To increase the degree of crosslinking or to impart the adhesion properties to the film, monomers having an epoxy group, a OH group, a COOH group, an amine group, etc. in the side chain are preferable. To decrease the refractive index, a monomer having a long perfluoroalkyl group is preferable. When the COOH group is contained, it is preferably blocked with a vinyl ether, etc. to prevent the reaction with the epoxy group at room temperature.

In general, the fluorine-containing prepolymer is dissolved in a solvent, and the solution is applied to a substrate, dried and cured to form the antireflection film.

The solvent to be used is suitably selected according to the kind of the prepolymer. The preferred examples of the solvent are as follows:

### (1) When the backbone is the TFE/PFVE copolymer:

### Having a high molecular weight (70,000 or higher)

Perfluoro(4-butyltetrahydrofuran), perfluorobenzene, etc.

### Having a low molecular weight (from 400 to 8,000)

Solvents having a C-F bond and a C-H bond, for example, ethers having a fluoroalkyl group and an alkyl group (e.g. C₄F₉-O-CH₃, etc.), hexafluoro-m-xylene, HCFC-225, etc. When the molecular weight is 700 or less, the solvents described in the following (2) may be used.

### (2) When the backbone is the VdF copolymer:

Ketone solvents (e.g. ethyl ethyl ketone, methyl isobutyl ketone, etc.), ester solvents (e.g. butyl acetate, etc.), nitrogen-containing solvents (e.g. dimethylformamide, dimethylacetamide, etc.)

When the fluorine-containing prepolymer having the epoxy groups according to the present invention is cured, the cured film is too hard for some applications. Thus, in some cases, it is preferable to impart flexibility to the cured film. In such a case, a compound which reacts with the epoxy group (e.g. a monovalent epoxy compound, a dihydric alcohol, etc.) is added to the prepolymer to extend the distance between the crosslinking sites, like in the prior art.

When it is desired to further increase the hardness of the cured film, an epoxy compound having a three or more functionalities may be added. However, it is necessary to uniformly disperse the added compound in the prepolymer.

The methods for curing the compound having the epoxy groups are roughly classified into the following groups:
1. A method using an amine as a curing agent (a crosslinking side being an amine)
2. A method using a polybasic carboxylic acid or its anhydride (a crosslinking site being a carboxylic acid)
3. Polymerization curing (a Brønsted acid or a tertiary amine being added as a curing agent to form a cationic polymerization initiator; a crosslinking site being an epoxy group)

Furthermore, a crosslinking method using the reaction of the epoxy group with a silane compound, an alcohol or a mercaptane compound is also known (see, for example, TOSOH KOGAKU (Coating Technology), 30(2), pages 57-58 (1995)).

Among the above curing methods, one of the well-studied curing methods is the method using the reaction of the carboxylic acid and the epoxy group, and the reaction may proceed as follows:

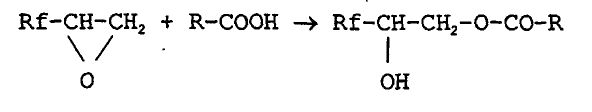

When the epoxy compound and the carboxylic acid both having two or more functionalities are used, a high molecular weight product (when the epoxy compound and the carboxylic acid are both bifunctional), or a three-dimensionally crosslinked product (when at least one of the epoxy compound and the carboxylic acid is tri-or higher functional). The formation of the three-dimensionally crosslinked product is apparently very advantageous from the viewpoint of the hardness. The formation of the simple high molecular weight product may be expected to have the hardness close to that of the three-dimensionally crosslinked product, because of the hydrogen bonds between the hydroxyl groups, or between the hydroxyl group and the carboxyl group. When the hydroxyl group and the carboxyl group form an ester bond, the three-dimensional crosslinking is achieved.

As shown in the above reaction formula, the hydroxyl group is formed at the same time as the epoxy group is esterified. Thus, an undercoat preferably has the good adhesion not only to the epoxy compound but also to a compound having an ester group or a hydroxyl group. In the concrete, the undercoat preferably contains an acrylic compound, an isocyanate compound or a silane compound, or such a compound is used to cure the undercoat.

In the present invention, the carboxylic acid to be used for curing is selected from the following viewpoints:
1. The carboxylic acid is compatible with the fluorine-containing epoxy compound to form a uniform and transparent film.
2. The carboxylic acid can be dissolved in a solvent in which the fluorine-containing epoxy compound is dissolved.
3. The carboxylic acid does not increase, but rather decreases the refractive index of the fluorine-containing epoxy compound.
4. The carboxylic acid does not easily evaporate.
5. The carboxylic acid is cost competitive.

The above second viewpoint is considered only when the fluorine-containing epoxy compound is applied in the form of a solution, but is not considered if no solvent is used.

To satisfy the requirements 1 through 4, the carboxylic acid is preferably a polybasic fluorine-containing acid.

Relatively easily synthesized carboxylic acids are roughly classified as follows:

### a. Carboxylic acid having a carboxyl group or carboxyl groups at the end(s) of a fluorine-containing linear chain

One specific example of such a carboxylic acid is a dicarboxylic acid of the formula:

HOOC-(CH₂)ₘ₁-Rf₁-(CH₂)ₘ₂-COOH

wherein Rf₁ is a group of the formula: -(CF₂)ₖ-, m1 and m2 represent independently each other an integer of 0 to 6, and k is an integer of 2 to 16. Rf₁ may be the group which is exemplified as the backbone of the epoxy compound. For example, Rf₁ may be a divalent organic group consisting of the repeating units of TFE and PFVE, or the repeating units of VdF and HFP.

To increase the antireflection effects, preferably the fluorine content is larger and the refractive index is lower. Thus, m1 and m2 are preferably both 0 (zero).

### b. Carboxylic acid prepared by hydrolyzing a part of the side chains of an acrylic polymer containing fluorine in the side chain to form carboxylic acid groups

A specific example of such a carboxylic acid is a copolymer of a monomer of the formula:

CH₂=CXCOORf

wherein Rf is a fluoroalkyl group, X is a hydrogen atom, a fluorine atom, a chlorine atom, a methyl group or a trifluoromethyl group, and a monomer of the formula:

CH₂=CXCOOH

wherein X is the same as defined above.

The copolymer may consist of two monomers, or it may comprise three or more monomers. Alternatively, the homo- or copolymer of the former monomer may be hydrolyzed to obtain a copolymer having the same structure as that of the copolymer of the above two monomers.

Examples of the fluoroalkyl group Rf are as follows:
-(CH₂)ₚ(CF₂)_{q}F (p: an integer of 1 to 6; q: an integer of 0 to 22);
-(CH₂)ₚ(CF₂)_{q}H (p and q: the same as defined above);
-(CH₂)ₚ(CF₂)ᵣCF(CF₃)₂ (r: an integer of 0 to 10; p: the same as defined above);
-C(CF₃)₂H; and
-CH₂-C(CF₃)₂CH₃.

Examples of the fluoroalkyl group, which are preferable from the economical viewpoint, are -CH₂CF₃, -CH₂CF₂CF₃, -CH₂CH₂(CF₂)₇CF₃, -CH₂CF₂CF₂H, -CH₂(CF₂)₄H, -CH₂(CF₂)₆CF₃, etc.

### c. Di- or higher polybasic carboxylic acid which is prepared by partly esterifying a tri- or higher polybasic carboxylic acid with a fluorine-containing alcohol

There are a large number of tri- or higher polyhydric carboxylic acids, and they provide a variety of esters depending on the esterified sites. Thus, the number of the esters further increases and it is impossible to exemplify all of the polybasic carboxylic acids included in this group. Therefore, preferable esters are exemplified below: 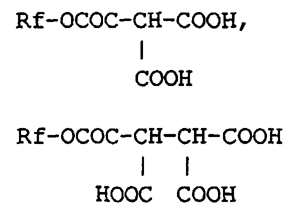 wherein Rf is the same as defined in the paragraph b; unsaturated polybasic carboxylic acids (e.g. citraconic acid, mesaconic acid, itacoic acid, etc.) which are partly esterified with RfOH.

### d. Polybasic carboxylic acid having Rf group

Sine a large number of compounds are include in the category, only a small number of preferable compounds are exemplified. 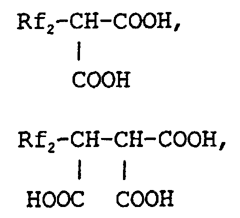 wherein Rf is the same as defined above, Rf₂ is the same as Rf which is defined in the paragraph b provided that p is an integer of 0 to 6.

While the above carboxylic acids are used to cure the epoxy compound, a part or all of the carboxylic groups may be blocked to improve the pot life of the mixture of the carboxylic acid and the epoxy compound or to increase the water resistance of the film after curing. The "blocking" is intended to mean that a specific

functional group (a carboxyl group herein) is temporally reacted with other compound (a blocking agent) to reduce the reaction activity of the functional group. The blocked functional group is returned to the original functional group with external excitation such as heat, light, etc. and thus the activity of the compound is revived.

The details of the blocking methods are well known in the art and described in JP-A-10-254096, TOSO KOGAKU (Coating Technology), 30(2), 57-68, and so on. In the present invention, the same blocking methods are employed. As a blocking agent, a vinyl ether compound is preferable.

When the cured film is used as the antireflection film, the above curing methods 1 and 2 may increase a refractive index of the film and, in turn, deteriorate the antireflection effects when the amine or the acid remains as the curing site, since the amount of the curing agent is large (about 10 wt. % of the fluorine-containing prepolymer having the epoxy group). In contrast, the curing method 3 uses the curing agent in a catalytic amount (5 wt. % or less). Furthermore, since the curing agent is not included in the cured product as the curing site, it can be removed from the film after curing. According, the polymerization curing is preferable since the curing agent less adversely affects the antireflection effects.

The curing agents for the polymerization curing are classified as follows:
1. Tertiary amines
2. Brønsted acids
3. Onium salts, for example, sulfonium salts, iodonium salts, etc., which generate Brønsted acids with the irradiation of UV ray.

The fluorine-containing prepolymer having the epoxy group, which is used in the present invention, is hardly cured with the conventional curing agents. As described above, the conventional curing agents are ionic and have high polarity. The fluorine-containing prepolymer according to the present invention has a low compatibility with the ionic curing agent, since the former has the high fluorine content, so that the curing agents are separated, the film is opacified, and the antireflection effects are deteriorated. Furthermore, the prepolymer and the curing agent are not in contact with each other in the molecule level due to the separation, and thus the reactivity greatly decreases. To increase the compatibility, the curing agent should have a fluorine-containing group.

However, when it is tried to introduce the fluorine-containing group in the conventional curing agent, the obtained agent loses the reactivity, or the synthesis is difficult. Since the conventional curing agent is ionic, the fluorine content should be much increased, but the increase of the fluorine content may be practically impossible.

Accordingly, the present invention uses curing agents which are different from the above conventional curing agents.

The polymerization curing is based on reactions such that an acid is generated by the external excitation and initiates the cationic polymerization of the epoxy compound, and the curing reaction proceeds. The present inventors have found that the compound having the following structure are useful as a polymerization curing agent for the fluorine-containing prepolymer having the epoxy group used in the present invention, since it can generate an acid by the application of heat or the irradiation of light. Such a compound has a high sensitivity to light, in particular, UV ray.

R₁R₂CX₁-CR_{w}X-CO-R₃ (I)

wherein R₁ and R₂ are the same or different and each a hydrogen atom, a fluorine atom, a chlorine atom, a bromine atom, an iodine atom, or an organic group comprising a carbon atom; X is a fluorine atom, a chlorine atom, a bromine atom, an iodine atom or a cyano group; R₃ is an organic group comprising a carbon atom or a group of the formula: -O-R₄ in which R₄ is an organic group comprising a carbon atom, a metal cation or an organic cation; R_{w} is an electron attracting group; and X₁ is a fluorine atom, a chlorine atom, a bromine atom or an iodine atom.

The generated acid may be HX or an active intermediate which is generated when XX₁ is removed from the compound of the formula (I).

When R₁, R₂ or R₃ is an organic group, the kind of the organic group is not limited, and any organic group may be used in principle. The organic group may be a polymer chain or one bonded to a polymer chain. The organic group is selected from the viewpoint of easiness of the synthesis, additional functions, costs, etc. Examples of the organic group for R₁, R₂ or R₃ include a methyl group, an ethyl group, a trifluoromethyl group, an acetyl group, a cyano group, CH₃-O-, CH₃CH₂-O-, etc.

Examples of the organic group for R₄ include -CH₂CF₃, -CH₃, -CH₂CH₂(CF₂)ₐF, -CH₂(CF₂CF₂)_{b}H and -CH₂(CF₂)ₐF wherein a is an integer of 1 to 20 and b is an integer of 1 to 10.

Since X is a counter ion to the H⁺, it may be a halogen atom or a cyano group (CN). When X is a halogen atom, the compound has the ability to initiate the radical polymerization, as disclosed in JP-A-6-228231. X is preferably a fluorine atom or a chlorine atom from the viewpoint of toxicity.

Rw is an electron attracting group, and its examples are -CO-, -CN, -F, -CF₃, -Cl, -NO₂, -SO₃H, -O-SO₃H, etc.

The carbonyl group (-CO-) in the formula (I) is the electron attracting group, and further it functions to stabilize the radical intermediate through resonance or to facilitate the absorption of UV ray to accelerate the decomposition of the compound.

The group of the formula: -CO-R₃ in the formula (I) may be replaced with a functional group comprising an aromatic ring. That is, a compound of the following formula can have the same functions:

R₁R₂CX₁-CR_{w}X-Φ (II)

wherein R₁, R₂, R₃, X and R_{w} are the same as defined above, and Φ is a functional group comprising an aromatic ring.

Examples of the functional group Φ comprising the aromatic ring include groups having a benzene ring, a naphthalene ring, a perylene ring, a pyrene ring, etc. Preferable examples of such a functional group are as follows:

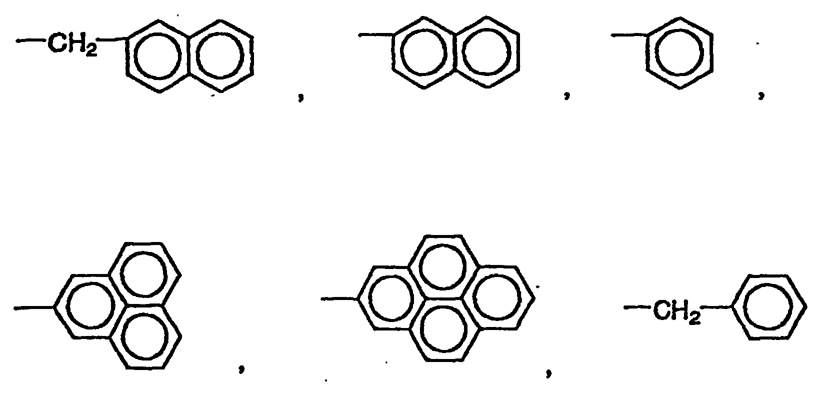

To impart the electron attracting property to the compound, a hydrogen atom on any position of the aromatic ring can be replaced with the electron attracting group, which is exemplified in relation to R_{w}.

The aromatic ring is advantageously bonded to the carbon atom to which R_{w} and X are bonded from the viewpoint of the acid generation rate.

R₃ and R₄ are selected by taking into consideration the compatibility with the prepolymer to be cured, and the melting point, the easiness of evaporation (when it is desirable to remove the curing agent by evaporation), the handling property and the decomposition rate of the curing agent. In particular, R₃ is preferably a group of the formula: -O-R₄ to synthesize a variety of the curing agents, because the compound having such a group can be prepared by bonding an alcohol of the formula: R₄OH to a carboxylic acid of the formula: R₁R₂CX₁-CR_{w}X-COOH or its anhydride or acid halide through the esterifying reaction. R₄ may be introduced by the transesterification of the ester of R₁R₂CX₁-CR_{w}X-COOH.

To cure the prepolymer having the high fluorine content, a curing agent containing fluorine is preferably used in view of the compatibility. Examples of the organic group contained in such a curing agent include -CH₂(CF₂)_{c}CF₃ (c: an integer of 0 to 10), -CH₂CH₂(CF₂)_{c}CF₃ (c: an integer of 0 to 10), etc.

Now, an embodiment of the synthesis method of the compound of the formula (I) is explained.

Some of the compound of the formula (I) may be prepared by adding a halogen compound (e.g. iodine (I₂), bromine (Br₂), chlorine (Cl₂), fluorine (F₂), IBr, ICl, IF, etc.) to an acrylic compound having an electron attracting group at the α-position (e.g. α-cyanoacrylate, α-fluoroacrylate, α-(trifluoromethyl)acrylate, α-chloroacrylate, etc.). Such a compound is represented by the following formula (III):

X₁CH₂-CR_{W}X-COOR₄ (III)

wherein R_{w}, R₄ and X are the same as defined above, X₁ is a fluorine atom, a chlorine atom, a bromine atom or an iodine atom.

As the halogen compound, Br₂ and Cl₂ are preferable since they have a moderately high addition reaction rate. Thus, it is preferable that X and X1 are both bromine atoms or chlorine atoms for the synthesis point of view.

The acrylate derivatives may be easily evaporated in spite of their molecular weights, since they are esters. In general, the polymerization curing of the epoxy compound is accompanied with the removal of water by heating since water functions as an inhibitor of the curing. Therefore, the esters may be evaporated off when the water is removed. To suppress the evaporation of the esters, R₄ is preferably an organic group or an organic cation having a molecular weight of at least 100.

The kind of an article which is treated with the antireflection film of the present invention, that is, a substrate is not limited.

Examples of the substrate material include inorganic materials such as glass, stones, concrete, tiles, etc.; synthetic resins such as polyvinyl chloride, polyethylene terephthalate, cellulose resins (e.g. triacetylcellulose, etc.), polycarbonate resins, polyolefin resins, acrylic resins, phenolic resins, xylene resins, urea resins, melamine resins, diallylphthalate resins, furan resins, amino resins, alkyd resins, urethane resins, vinyl ester resins, polyimide resins, etc.; metals such as iron, aluminum, copper, etc.; wood, paper, printed materials, photographic paper, paintings, and so on.

It is possible to increase the decorativity of an article by providing the antireflection film on a part of the article other than the specific part so that the shape of the specific part is clearly edged with the reflected light.

The present invention is effective when it is applied to the following articles:
- Optical parts such as prisms, lens sheets, polarization plates, optical filters, lenticular lenses, fresnel lenses, screens of back-projection type displays, optical fibers, optical couplers, etc.;
- Transparent protective plates such as glass of show windows, glass of showcases, signboard covers, covers of photo-stands, etc.;
- Protective plates for CRT, liquid crystal displays, plasma displays, back-projection type displays, etc.;
- Optical recording media such as magnetoptical discs, read-only optical discs (e.g. CD, LD, DVD, etc.), phase-transition type optical discs (e.g. PD, etc.), holographic memories, etc.;
- Protective covers of illuminators such as halogen lamps, fluorescent lamps, electric light bulbs, etc.;
- Sheets or films which are adhered to the above-described articles.

The antireflection film of the present invention may be formed by applying the solution of the fluorine-containing prepolymer having the epoxy group directly to the substrate to form a film having a thickness of about 0.1 µm, while the antireflection film is provided as a topcoat on an undercoat having a single layer or a plurality of layers.

The undercoat has roughly three effects, that is, to increase the scratch resistance of the topcoat, to protect the substrate and to improve the antireflection effect by the addition of a layer having a higher refractive index than that of the substrate.

To increase the scratch resistance of the topcoat, a self-repairing undercoat, which is disclosed in JP-A-7-168005, may be used. To protect the substrate, a coating called a hard coat is used. Examples of the hard coat include curable acrylic resins or epoxy resins, the, cured materials of silicone alkoxide compounds, the cured materials of metal alkoxide compounds, etc. They are all cured by heating. For the acrylic resins and the epoxy resins, UV ray-curing is preferable from the viewpoint of productivity.

In the case of CRT and the plasma displays, static electricity tends to be charged on the surface as the property of the device. Thus, it is preferable to compound an additive which can impart conductivity in the undercoat layer(s) and/or the topcoat layer.

Examples of such an additive include polymers having ionic groups such as -COO⁻, -NH₂, -NH₃⁺, -NR¹¹R¹²R¹³ wherein R¹¹, R¹² and R¹³ are methyl groups, ethyl groups, n-propyl groups, n-butyl groups, etc., or -SO₃⁻, silicone compounds, inorganic electrolytes (e.g. NaF, CaF₂, etc.), and so on.

To prevent the adhesion of dusts, an antistatic agent is preferably added to the undercoat layer(s) and/or the topcoat layer of the antireflection film. Examples of the antistatic agent include fine particles of metal oxides, fluoroalkoxysilanes, surfactants (anionic, cationic, amphoteric and nonionic surfactants) as well as the above additives which impart the conductivity.

The antistatic agents to be added to the undercoat layer(s) are preferably the fine particles of the metal oxides, in particular, antimony-doped tin oxide (ATO) and indium-tin oxide (ITO), since their effects last long and are not affected by moisture, they have high antistatic effects, and they can increase the antireflection effect since they can adjust the refractive index of the substrate because of their high transparency and high refractive index. Among them, ATO is preferable in view of the transparency, while ITO is preferable in view of the antistatic effect or the conductivity. When the antistatic effect is not required, such additives may be used to increase the antireflection effect since they can easily adjust the refractive index. When such an inorganic filler is used, the content of the filler (solid content) may be several ten % to attain the above functions. Thus, the film becomes fragile. In such a case, a tough coating of the cured material of the fluorine-containing epoxy compound is formed on the fragile film, they together form a tough laminate film. Such a laminate film is not easily scratched with nails, etc.

Since ATO or ITO easily scatters or absorbs light, the thickness of the undercoat layer is preferably in the order of sub-microns to avoid the interference of the light transmission. Although it depends on the refractive index of the cured material of the fluorine-containing prepolymer, the thickness of the undercoat layer is preferably from 0.05 to 0.3 µm to decrease the dependency of the antireflection effects on the wavelength and to increase the antireflection effects over the whole wavelength range. The optimum refractive index of the undercoat layer depends on the reflective index of the fluorine-containing prepolymer, and is preferably from 1.55 to 1.95.

To impart the antistaticity to the coating of the cured material of the fluorine-containing prepolymer, alkoxysilane based antistatic agents are preferable since they have less effect to increase the refractive index and less adverse effect on the antireflection effects. Among them, fluoroalkoxysilanes are more preferable since they have much less effect to increase the refractive index, and further it is expected that they improve the surface properties.

Apart from the above method which modifies a part of the film, there is a method to form a layer of a surfactant having a thickness such that the antireflection function are not adversely affected, as described in JP-A-8-142280. When such a method is applied to the present invention, it can increase the stain-proofing properties such as the prevention of the dust adhesion. The formation of the hard coat layer has the same effects.

The hard coat layer may be formed by applying the solution of an alkoxysilane or a polysilazane and heating and curing it. Furthermore, the cured film of a UV-curable acrylic coating or crosslinked melamine may be used.

To impart the stain-proofing property to the antireflection film, a fluorine-containing oil can be added to the film. In this case, the amount of the oil should be determined by taking into consideration the degradation of the mechanical properties, the turbidity caused by the phase separation of the oil from the fluorine-containing polymer. When the terminal of the oil has a COOH group, a blocked COOH group, a OH group or an epoxy group, it reacts with the epoxy group and thus the oil can be fixed in the film. The same effects can be attained when such an oil is applied to the surface of the antireflection film.

To form the thin film of the fluorine-containing polymer, there are two methods, one of which comprises applying the dispersion of the fluorine-containing polymer on the substrate, drying it and the optionally baking it to form a film, and the other of which comprises applying the solution of the fluorine-containing polymer on the substrate and drying it. The latter method is preferable since the thin film can be easily formed. In the above methods, any application method can be used insofar as the film thickness can be satisfactorily controlled. For example, roll coating, microgravure coating, gravure coating, flow coating, bar coating, spray coating, or die coating as disclosed in JP-A-7-151904 may be employed. From these coating methods, a suitable method is selected by taking into account the balance of the productivity, the controllability of the film thickness, yields, and so on.

Alternatively, the antireflection film which has been shaped in the form of a film or a sheet may be adhered to a substrate.

A silane compound may be added to the antireflection film to increase the adhesion of the film to the substrate. The amount of the silane compound to be added to the film may be several percents, since the film strength is mainly secured by the three-dimensional crosslinking of the epoxy groups. The treatment of the substrate surface with the silane compound can serve to the improvement of the adhesion. In the present invention, any of the above methods have very few adverse effects on the antireflection properties since the silane compound dose not increase the refractive index of the cured film.

### EXAMPLES

The present invention will be illustrated by the following Examples and Comparative Examples.

### Synthesis Example 1-1

In a 50 ml glass autoclave, I(CF₂CF₂)I (6.0 g) and CF₂=CFOCF₂CF₂CF₃ (20 ml) were charged and cooled with dry ice. Then, the autoclave was evacuated and pressurized with nitrogen gas three times. After evacuation, CF₂=CF₂ gas was cycle-charged under a pressure of 5 to 6 atm. while maintaining the temperature at 45 to 50°C and irradiating the autoclave with a high-pressure mercury lamp (USH-250D manufactured by USHIO INC.) The reaction was carried out while stirring the reaction mixture at 700 rpm with a screw type agitation blade.

The iodine atoms of I(CF₂CF₂)I or the polymer chain ends are liberated by the irradiation of light, and the ion-transfer polymerization proceeds with inserting CF₂=CFOCF₂CF₂CF₃ or CF₂=CF₂ between the liberated iodine atom and the remaining part of the compound or the polymer. (The iodine-transfer polymerization means a polymerization mode in which a terminal iodine atom is liberated in the form of an iodine radical and the polymer chain end forms a radical, the polymer chain grows at the radical part for a certain time, and finally the liberated iodine is added to the chain end. That is, the polymerization proceeds in a quasi-living polymerization mode. The details of the iodine-transfer polymerization is described in JP-B-58-4728.)

When the CF₂=CF₂ gas was charged 13 times (reaction time: 3 hours and 45 minutes), the irradiation of light was stopped and the interior of the autoclave was depressurized to terminate the iodine-transfer polymerization. The liquid temperature was raised to 100°C, and the unreacted raw materials were discharged under reduced pressure. At this stage, a perfluoroelastomer having C-I bonds at the chain ends and a molecular weight of about 1,000 was formed.

After cooling to room temperature, allyl glycidyl ether (6.0 g) and HCFC-225 (20 ml) were added to the reaction mixture, and the mixture was cooled with dry ice. Then, the interior of the autoclave was replaced with nitrogen gas three times. The autoclave was irradiated with the same high-pressure mercury lamp for one hour while maintaining the temperature at 40°C and stirring the mixture at 600 rpm. Thereafter, the liquid temperature was raised to 100°C and the unreacted raw materials were discharged under reduced pressure. In the above procedure, almost all the polymer chain ends reacted with allyl glycidyl ether as follows:

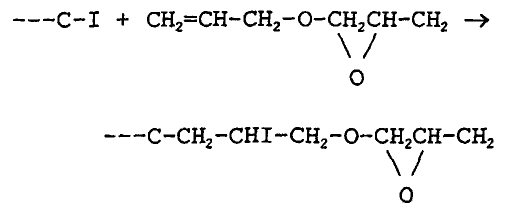

Thus, a polymer comprising a perfluoroelastomer backbone and a terminal epoxy group was synthesized. By the above procedure, 15 g of the polymer was obtained. This polymer is referred to as Fluorine-containing prepolymer 1.

Fluorine-containing prepolymer 1 was a liquid perfluororubber having the epoxy groups bonded to both ends of the polymer chain.

### Synthesis Example 1-2

An epoxy group-containing polymer was prepared in the same manner as in Synthesis Example 1-1 except that perfluorohexane was used in place of 20 ml CF₂=CFOCF₂CF₂CF₃, and a mixed gas of CF₂=CF₂ and CF₂=CFOCF₃ (in a molar ratio of 6.5:3.5) was used in place of CF₂=CF₂. This polymer is referred to as Fluorine-containing prepolymer 2. Fluorine-containing prepolymer 1 was a liquid perfluororubber having the epoxy groups bonded to both ends of the polymer chain.

### Synthesis Example 2-1

Br₂ was added by portion by portion to CH₂=CFCOOCH₂CH₂(CF₂)₇CF₃ (hereinafter referred to as "17FFA"). The total added amount of Br₂ was selected such that the weight ratio of 17FFA to Br₂ was 5.50:1.60 (g/g). That is, in a molar ratio, 17FFA was slightly excessive.

As the addition reaction of Br₂ to the double bond proceeded, the coloration with Br₂ disappeared. Here, 17FFA and Br₂ were diluted with α,α,α,α',α',α'-hexafluorometaxylene (hereinafter referred to as "m-XHF") to a concentration of 10 wt. %, respectively.

After the addition of the determined amount of Br₂, the reaction mixture was kept standing at room temperature until the coloration with Br₂ disappeared.

Thus, the 10 wt. % solution of the curing agent in m-XHF was prepared. This solution is referred to as Curing agent 1.

The above addition reaction proceeds very slowly in comparison with the addition reaction with methyl methacrylate or styrene, and thus can be easily controlled at room temperature. The reaction under a completely shaded condition is not preferable, since the addition reaction rate of Br₂ is too low. Preferably, the ambient light reaches the glass reactor. When the reaction rate is too high, it can be reduced by shielding the reactor from light, cooling, or dilution with a solvent.

### Synthesis Example 2-2

Br₂ was added by portion by portion to CH₂=C(CF₃)COOCH₂(CF₂)₄H (hereinafter referred to as "8F3FA"). The total added amount of Br₂ was selected such that the weight ratio of 8F3FA to Br₂ was 3.60:1.60 (g/g). That is, in a molar ratio, 8F3FA was slightly excessive.

As the addition reaction of Br₂ to the double bond proceeded, the coloration with Br₂ disappeared. Here, 8F3FA and Br₂ were diluted with m-XHF to a concentration of 10 wt. %, respectively.

After the addition of the determined amount of Br₂, the reaction mixture was kept standing at room temperature until the coloration with Br₂ disappeared. This solution is referred to as Curing agent 2.

The reaction rate and its control were the same as those described in Synthesis Example 2-1.

### Comparative Synthesis Example

2,2,3,3,3-Pentafluoropropyl 2-fluoroacrylate (100 g), AIBN (azobisisobutyronitrile (0.015 g) and isooctyl mercaptoacetate (2.0 g) as a chain transfer agent were mixed, and evacuated under reduced pressure. Then, the reaction mixture was maintained at 50°C for 24 hours.

The resulting polymer was dissolved in acetone and then precipitated by charging the solution to methanol to purify the polymer.

### Example 1

Fluorine-containing prepolymer 1, m-XHF and Curing agent 1 (see Synthesis Example 2-1) were mixed in a ratio of 100:900:30 (by wt. parts) to obtain a top coat solution. The weight ratio of the prepolymer to the curing agent (solid content ratio) was 100:3.

This solution was dip coated on an acrylic resin plate at a pulling rate of 60 mm/sec. Then, the coated plate was air dried and dried in a hot air drying furnace at 40°C for 3 minutes.

Thereafter, the coated plate was irradiated for 20 seconds by UV light using a UV ray irradiation apparatus (USH-250D manufactured by USHIO INC.)

Thus, the acrylic resin plate having the antireflection film was obtained.

### Example 2

An acrylic resin plate having the antireflection film was produced in the same manner as in Example 1 except that Fluorine-containing prepolymer 2 was used in place of Fluorine-containing prepolymer 1.

### Example 3

A UV-curable antistatic coating (P3555 manufactured by CATALYSTS & CHEMICALS INDUSTRIES CO., LTD.) was diluted with the three times volume of butyl acetate. Then, the diluted coating was dip coated on an acrylic resin plate at a pulling rate of 60 mm/sec., and the coated plate was air dried and dried in a hot air drying furnace at 40°C for 3 minutes.

Thereafter, the antistatic layer was cured by the irradiation of UV ray in the same manner as in Example 1 to form an undercoat. This layer functioned as the antistatic layer and contributed to the increase of the antireflection effects as a layer having a high refractive index.

On the above antistatic layer, the fluorine-containing prepolymer was applied in the same manner as in Example 1, and irradiated with UV ray. Thus, an article having two antireflection layers was obtained.

### Example 4

An acrylic resin plate having the antireflection film was produced in the same manner as in Example 1 except that Curing agent 2 as used in place of Curing agent 1.

### Example 5

The primary agent of a heat-curing type antistatic coating (P3574 manufactured by CATALYSTS & CHEMICALS INDUSTRIES CO., LTD.) (100 parts), a curing agent (7 parts) of the antistatic coating P3574 and butyl acetate (300 parts) were mixed to obtain the coating for an undercoat. This coating was dip coated on an acrylic resin plate at a pulling rate of 100 mm/min., and the coated plate was air dried and dried in a hot air drying furnace at 110°C for 10 minutes to form an antistatic layer (undercoat layer).

Fluorine-containing prepolymer 1, perfluorosuberic acid (HOOC-(CF₂)₆-COOH) and methyl ethyl ketone were mixed in a ratio of 10:3:90 (by wt. parts) to obtain a topcoat solution. The topcoat solution was dip coated on the above antistatic layer at a pulling rate of 200 mm/min, and air dried, followed by drying in a hot air drying furnace at 160°C for 10 minutes to cure the topcoat.

To prevent the thermal deformation of the acrylic resin plate, the curing of the undercoat and the topcoat was carried out while suspending the plate in the drying furnace with fixing the top end.

Thus, the acrylic resin plate having the antireflection layer was obtained.

### Exampel 6

A UV-curable coating (DIABEAM UR 4222 manufactured by Mitsubishi Rayon Co., Ltd.) was dip coated on an acrylic resin plate at a pulling rate of 200 mm/min. and then dried in a hot air drying furnace at 40°C for 5 minutes and irradiated by UV ray for 20 seconds with a UV ray irradiation apparatus (USH-250D manufactured by USHIO INC.)

Thereafter, the undercoat and the topcoat were formed in the same manner as in Example 5.

Thus, the acrylic resin plate having the antireflection layer was obtained.

### Comparative Example 1

The polymer prepared in Comparative Synthesis Example was dissolved in butyl acetate to obtain a 3 wt. % solution, and the solution was dip coated on an acrylic resin plate at a pulling rate of 100 mm/min.

### Comparative Example 2

An acrylic resin plate as such was used.

### Comparative Example 3

An antireflection layer was formed on an acrylic resin plate in the same manner as in Example 1 except that Curing agent 1 was not used.

### Properties of Antireflection Film

The following properties of the antireflection film were measured (except the measurement of a refractive index).

If the antireflection film was ranked "X" in the abrasion resistance test and the scratch resistance test, other properties might not be measured in some cases.

### 1. Refractive index of topcoat

A refractive index of a topcoat was measured with an Abbe refractometer (manufactured by KABUSHIKIKAISHA ATAGO) at 25°C with light having a wavelength of 550 nm.

In the case of a cured material, a film having a thickness of about 0.1 mm was formed on an aluminum foil and cured in the same way in the case of the antireflection film, and then the aluminum foil was dissolved with dilute hydrochloric acid to obtain a sample film. With other materials, a film having a thickness of about 0.1 mm was formed by casing a solution and used as a sample film.

### 2. Single-side reflectance

A 5 degree-regular reflection unit was attached to a visible-UV spectroscope (U-3410 manufactured by Hitachi Ltd.), and a reflectance was measured with light having a wavelength of 550 nm.

### 3. Light transmittance

A light transmittance was measured using a visible-UV spectroscope (U-3410 manufactured by Hitachi Ltd.) with light having a wavelength of 550 nm using an air as a reference.

### 4. Scratch resistance

Steel wool #0000 was attached to a rubbing tester (manufactured by TAIHEI RIKA), and a test sample was rubbed with reciprocating the steel wool on the sample 20 times while applying a load of 220 g on an area of 22 cm² (pressure: about 10 gf/cm²). After cleanly wiping the surface, the degree of scratches was checked, and evaluated according to the following three ranks:
A: No change in appearance
B: Two or three slight scratches
C: Large scratches or many scratches

### 5. Abrasion resistance

A standard cotton cloth (white broadcloth) was attached to a rubbing tester (manufactured by TAIHEI RIKA), and the antireflection film was rubbed with reciprocating the cotton cloth on the sample 100 times while applying a load of 900 g on an area of 6.2 cm² (pressure: about 150 gf/cm²). Then, th change of the conditions of the film was checked, and evaluated according to the following three ranks:
A: No change in appearance
B: The film thickness changed, and the reflectance increased
C: The substrate was exposed in some areas

### 6. Adhesion

A cross hatch test was carried out according to JIS K 5400.

### 7. Adsorption of dusts

In an atmosphere at a humidity of 50 % or less, 10 sheets of KIM WIPE® (manufactured by KABUSHIKIKAISHA CRESIA) each having a size of 5 x 5 mm were placed. Then, a test piece, which had been abraded in the same manner as in the abrasion resistance test, was approached to a distance of 3 mm from the KIM WIPE® sheets, and maintained at this distance for 5 seconds. Thereafter, the test piece is gently pulled up.

When two or more sheets were adhered to the test piece with electrostaticity, the test piece was ranked "YES", while when no sheet was adhered, the test piece was ranked "NO". When one sheet was adhered, the above test was repeated from the abrading step and reevaluated.

The results are shown in Table 1.

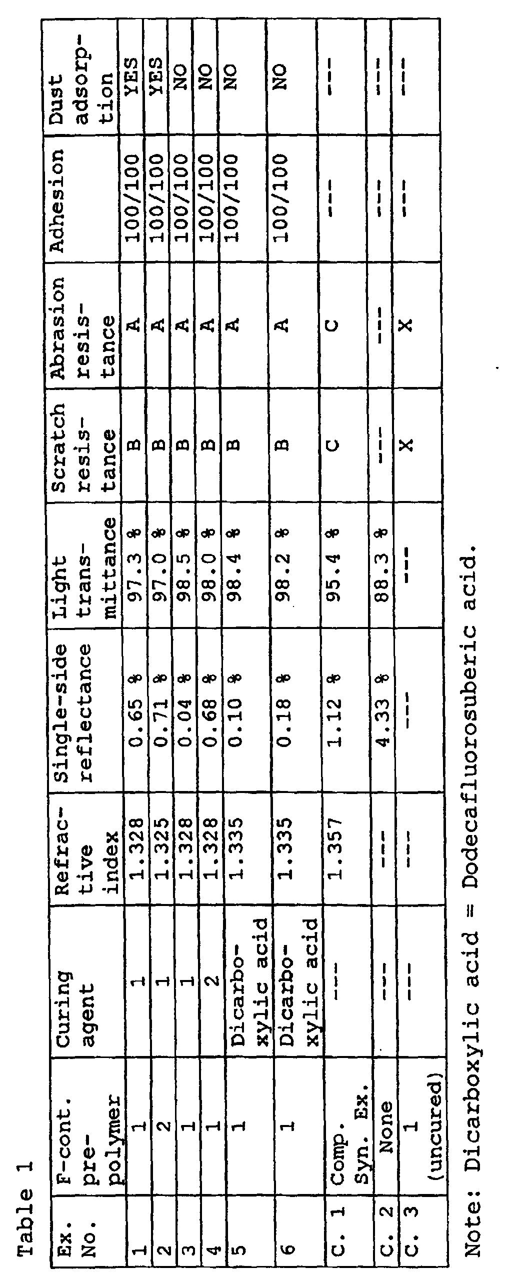

## Claims

1. An antireflection film comprising a cured film of a fluorine-containing prepolymer, wherein the prepolymer is a compound having a fluorine content of at least 50 wt. % and at least two epoxy groups bonded to one molecule, and the thickness of the cured film is from 0.03 to 0.5 µm.

2. The antireflection film according to claim 1, wherein at least two epoxy groups in one molecule of said fluorine-containing prepolymer are present at the telecheric positions.

3. The antireflection film according to claim 1, wherein said fluorine-containing prepolymer has a copolymer block comprising tetrafluoroethylene units and perfluorovinyl ether units, and is amorphous.

4. An antireflection-treated article covered with the antireflection film according to any one of claims 1 to 4.
